# EUROPÄISCHE PATENTSCHRIFT

(11) **EP 3 071 872 B1**
(45) Veröffentlichungstag und Bekanntmachung des Hinweises auf die Patenterteilung: **24.03.2021**
(21) Anmeldenummer: 14781166.5
(22) Anmeldetag: 05.10.2014
(51) Int. Cl.: F16L 55/165

(54) **AUSKLEIDUNGSSCHLAUCH FÜR DIE SANIERUNG VON FLUIDFÜHRENDEN LEITUNGSSYSTEMEN, VERFAHREN UND VERWENDUNG**
LINER TUBE FOR RENOVATING FLUID-BEARING PIPE SYSTEMS, METHOD AND USE
FLEXIBLE DE DOUBLAGE POUR LA RÉNOVATION DE SYSTÈMES DE CONDUITES GUIDANT DES FLUIDES, PROCÉDÉ ET UTILISATION

(30) Priorität: 08.10.2013 DE 102013111094
(43) Veröffentlichungstag der Anmeldung: 28.09.2016
(73) Patentinhaber: RelineEurope AG, 76865 Rohrbach (DE)
(72) Erfinder: REICHEL, Stefan, 67098 Bad Dürkheim (DE); NOLL, Christian, 67117 Limburgerhof (DE)
(74) Vertreter: Dr. Langfinger & Partner
(86) Internationale Anmeldenummer: PCT/EP2014/071276
(87) Internationale Veröffentlichungsnummer: WO 2015/052101

(56) Entgegenhaltungen:
- EP-A2- 0 393 304
- WO-A1-00/68543
- WO-A1-00/73692
- WO-A1-95/04646
- DE-A1-102011 105 592

## Beschreibung

Die vorliegende Erfindung betrifft einen Auskleidungsschlauch, ein Verfahren zur Herstellung eines solchen Auskleidungsschlauchs, sowie eine Verwendung eines solchen Auskleidungsschlauchs.

Verfahren zur Sanierung von Leitungssystemen, in denen zum Beispiel flüssige oder gasförmige Medien transportiert werden, sind im Stand der Technik bekannt und vielfach beschrieben.

Beispielsweise sind Verfahren bekannt, bei denen die einen Defekt oder eine Beschädigung aufweisenden Abschnitte des Leitungssystems durch neue Abschnitte ersetzt werden. Dies ist jedoch aufwendig und auch nicht immer möglich. Des weiteren sind Verfahren im Stand der Technik bekannt, bei denen zur Sanierung von Leitungssystemen, z.B. von Kanälen und ähnlichen Rohrsystemen, ein flexibler, mit einem härtbaren Harz getränkter Faserschlauch, der als Auskleidungsschlauch, auch als Liner bezeichnet, dient, in das Leitungssystem eingeführt wird. Nach dem Einführen wird der Auskleidungsschlauch aufgeweitet, so dass er sich eng an die Innenwand des Leitungssystems anschmiegt. Anschließend wird das Harz ausgehärtet.

Die Herstellung eines derartigen Auskleidungsschlauches ist beispielsweise in der WO 95/04646 beschrieben. Ein solcher Auskleidungsschlauch weist üblicherweise eine lichtundurchlässige äußere Schutzfolie, eine mindestens für bestimmte Wellenlängenbereiche elektromagnetischer Strahlung durchlässige Innenfolie sowie ein mit einem Harz getränktes Faserband auf, das zwischen der Innenfolie und der Außenfolie angeordnet ist.

Aus der WO 00/73692 A1 ist ein Auskleidungsschlauch bekannt, umfassend einen Innenfolienschlauch, ein mit einem Harz getränktes Faserband und einen Außenschlauch, der an seiner Innenseite mit einem Faservlies kaschiert ist

Ein weiterer Auskleidungsschlauch ist aus der WO 00/68543 A1 bekannt.

Oftmals wird der harzgetränkte Faserschlauch auf den Innenschlauch eines Auskleidungsschlauchs zu dessen Herstellung schraubenförmig und überlappend aufgewickelt. Der Außenschlauch wird anschließend ebenfalls schraubenförmig und überlappend um den harzgetränkten Faserschlauch gewickelt.

Nach einer Aushärtung der Auskleidungsschläuche im Leitungssystem müssen diese möglichst dicht sein.

Demzufolge lag der vorliegenden Erfindung die Aufgabe zugrunde, Auskleidungsschläuche zur Sanierung von fluidführenden Leitungssystemen zur Verfügung zu stellen, die nicht mit den Nachteilen des Stands der Technik behaftet sind, und die Auskleidungsschläuche mit einer guten Dichtheit liefern.

Die Aufgabe der vorliegenden Erfindung wird gelöst durch einen Auskleidungsschlauch mit mindestens einer aushärtbaren Lage, wobei diese mindestens eine Lage mindestens ein mit Harz getränktes Faserband umfasst, und mit einem auf der aushärtbaren Lage auf der dem strömenden Medium abgewandten Seite angeordneten ersten, beidseitig mit einer eine Dicke von 10 bis 1000 µm aufweisenden Armierung (einem Verstärkungselement) versehenen Außenfolienschlauch wobei der Außenfolienschlauch beidseitig mit Harz getränkt ist.

Durch die beidseitige Harztränkung dieses ersten Außenfolienschlauchs wird eine gute Verbindung zwischen diesem Außenfolienschlauch und der Lage aus harzgetränkten Faserbändern erzielt.

Zudem wird durch die beiderseitige Armierung des Außenfolienschlauchs die Dichtigkeit des Gesamtsystems verbessert. Durch die beiderseitige Harztränkung wird eine doppelte Barriere in beide Richtungen geschaffen, was dann durch das Aushärten des Harzes noch verstärkt wird.

Ferner wird durch harzgetränkte Verstärkung auf der den Faserbändern abgewandten Seite die Anbindung weiterer Folien, die gemäß bevorzugter Ausführungsformen vorhanden sein können, verbessert.

Unter dem Begriff "Schlauch (z. B. Außenfolienschlauch) im Sinne der vorliegenden Erfindung sollen dabei grundsätzlich vorgefertigte Folienschläuche, Flachfolien, die nach Verbindung der Ränder einen Schlauch bilden oder gewickelte Anordnungen von Folien- oder Faserbändern verstanden werden. Nach Einbau in das zu sanierende Leitungssystem und Aushärtung bilden alle diese Gestaltungen im wesentlichen zylindrische rohrförmige Elemente.

Bei dem Verstärkungselement, welches für den beidseitig armierten Folienschlauch eingesetzt wird, kann es sich um ein an sich bekanntes Verstärkungselement handeln. Nur beispielsweise seien hier Vliese, Filze Gewebe oder Gelege genannt, wobei Vliese sich in einigen Fällen als besonders vorteilhaft herausgestellt haben.

Dabei eignen sich dabei grundsätzlich alle dem Fachmann bekannten Produkte in Form von Geweben, Gewirken, Gelegen, Matten oder Vliesen, die Fasern in Form von langen Endlosfasern oder kurzen Fasern enthalten können. Entsprechende Produkte sind dem Fachmann an sich bekannt und in großer Vielfalt von verschiedenen Herstellern kommerziell erhältlich.

Unter Geweben werden dabei im allgemeinen flächenförmige Textilerzeugnisse aus mindestens zwei rechtwinklig gekreuzten Fasersystemen verstanden, wobei die so genannte Kette in Längsrichtung und der so genannte Schuß senkrecht dazu verlaufen.

Unter Gewirken werden im allgemeinen Textilerzeugnisse verstanden, die durch Maschenbildung erzeugt werden.

Fasergelege sind eine Verarbeitungsvariante von Fasern, bei denen die Fasern nicht verwoben werden, sondern parallel zueinander ausgerichtet in eine chemische Trägersubstanz (die Matrix) eingebettet sind und im Regelfall durch Deckfolien von oben und unten fixiert werden. Fasergelege weisen durch die parallele Ausrichtung der Fasern eine ausgeprägte Anisotropie der Festigkeiten Orientierungsrichtung und senkrecht dazu auf, was für manche Anwendungen von Interesse sein kann.

Ein Vlies besteht aus lose zusammen liegenden Fasern, welche noch nicht miteinander verbunden sind. Die Festigkeit eines Vlieses beruht nur auf der fasereigenen Haftung, kann aber durch Aufarbeitung beeinflusst werden. Damit man das Vlies verarbeiten und benutzen kann, wird es in der Regel verfestigt, wofür verschiedene Methoden angewandt werden können.

Vliese sind verschieden von Geweben, oder Gewirken, die sich durch vom Herstellverfahren bestimmte Legung der einzelnen Fasern oder Fäden auszeichnen. Vliese bestehen dagegen aus Fasern, deren Lage sich nur mit den Methoden der Statistik beschreiben lässt. Die Fasern liegen wirr im Vliesstoff zueinander. Die englische Bezeichnung *nonwoven* (nicht gewebt) grenzt sie dementsprechend eindeutig von Geweben ab. Vliesstoffe werden unter anderem nach dem Fasermaterial (z. B. das Polymer bei Chemiefasern), dem Bindungsverfahren, der Faserart (Stapel- oder Endlosfasern), der Faserfeinheit und der Faserorientierung unterschieden. Die Fasern können dabei definiert in einer Vorzugsrichtung abgelegt werden oder gänzlich stochastisch orientiert sein wie beim Wirrlagen-Vliesstoff.

Wenn die Fasern keine Vorzugsrichtung in ihrer Ausrichtung (Orientierung) haben, spricht man von einem isotropen Vlies. Sind die Fasern in einer Richtung häufiger angeordnet als in der anderen Richtung, dann spricht man von Anisotropie.

Auch Filze sind als Armierung für die beidseitig armierte Folie einsetzbar. Ein Filz ist ein Flächengebilde aus einem ungeordneten, nur schwer zu trennendem Fasergut. Prinzipiell sind Filze damit nicht gewebte Textilien. Aus Chemiefasern und Pflanzenfasern werden Filze in der Regel durch trockene Vernadelung (sog. Nadelfilze) oder durch Verfestigung mit unter hohem Druck aus einem Düsenbalken austretenden Wasserstrahlen hergestellt. Die einzelnen Fasern im Filz sind ungeordnet miteinander verschlungen.

Nadelfilz wird mechanisch in der Regel mit zahlreichen Nadeln mit Widerhaken hergestellt, wobei die Widerhaken umgekehrt wie bei einer Harpune angeordnet sind. Dadurch werden die Fasern in den Filz gedrückt und die Nadel geht leicht wieder heraus. Durch wiederholtes Einstechen werden die Fasern miteinander verschlungen und anschließend eventuell chemisch oder mit Wasserdampf nachbehandelt.

Filze lassen sich - wie Vliese - aus praktisch allen natürlichen oder synthetischen Fasern herstellen. Neben der Vernadelung oder in Ergänzung ist auch das Verhaken der Fasern mit einem gepulsten Wasserstrahl oder mit einem Bindemittel möglich. Die letztgenannten Verfahren eignen sich insbesondere für Fasern ohne Schuppenstruktur wie Polyester- oder Polyamidfasern.

Filze weisen eine gute Temperaturbeständigkeit auf und sind in der Regel feuchtigkeitsabweisend, was bei der Anwendung in flüssigkeitsführenden Systemen von Vorteil sein kann.

Die Länge der in faserhaltigen Armierungsmitteln verwendeten Fasern unterliegt an sich keiner besonderen Beschränkung, d.h. es können sowohl so genannte Langfasern als auch Kurzfasern oder Faserbruchstücke verwendet werden. Über die Länge der verwendeten Fasern lassen sich die Eigenschaften der entsprechenden Faserbänder auch über weite Bereiche einstellen und steuern.

Auch die Art der verwendeten Fasern unterliegt keiner Beschränkung. Nur beispielhaft seien hier Glasfasern, Carbonfasern oder Kunststofffasern wie Aramidfasern oder Fasern aus thermoplastischen Kunststoffen wie Polyestern oder Polyamiden oder Polyolefinen (z.B. Polypropylen) genannt, die dem Fachmann mit ihren Eigenschaften bekannt und in großer Vielzahl kommerziell erhältlich sind. Aus wirtschaftlichen Gründen werden in der Regel Glasfasern bevorzugt; werden Fasern auf Basis anderer Materialien eingesetzt, kann es vorteilhaft sein, Aramidfasern oder Carbonfasern zu verwenden, die hinsichtlich der Festigkeit bei höheren Temperaturen Vorteile gegenüber Fasern auf der Basis von thermoplastischen Kunststoffen bieten können.

Das Kunststoffmaterial für die Folien der beidseitig armierten Folie unterliegt keiner grundsätzlichen Beschränkung und der Fachmann wird nach dem angestrebten Anwendungszweck ein geeignetes Folienmaterial auswählen. Vorteilhaft ist, wenn die Folie eine Sperrwirkung gegen in den harzgetränkten Faserbändern, die mit der beidseitig armierten Folie in Kontakt stehen, vorhandenem Harz bzw. Harzkomponenten (z.B. Lösungsmittel) aufweist. Geeignete Folienmaterialien sind dem Fachmann an sich bekannt und in der Literatur beschrieben. Nur stellvertretend seien hier Polyolefinfolien oder Verbundfolien aus Polyolefinen und Polyamiden genannt, die eine gute Sperrwirkung gegen das häufig als Lösungsmittel in den zur Tränkung verwendeten Harzen enthaltene Styrol aufweisen.

Die Verbindung der beidseitigen Armierung mit der Folie kann auf an sich bekannte Weise beispielsweise thermisch durch Verschweißen oder kaschieren oder mit Hilfe geeigneter Kleber erfolgen. Wesentlich ist, dass die Armierung mit der Folie eine ausreichend stabile Verbindung aufweist um eine Trennung oder Delaminierung während der Herstellung des Auskleidungsschlauchs zu vermeiden.

Besonders bevorzugt handelt es sich bei der Armierung der beidseitig armierten Folie um eine Vlieskaschierung.

Dabei soll im Folgenden unter Vliesschicht auch eine Anordnung von mehr als einem Vlies verstanden werden, d.h. jede der Vliesschichten kann aus einer Kombination von mehreren Vliesen bestehen. Bevorzugt ist allerdings ein Vlies pro Vliesschicht.

Neben dem erfindungsgemäß wesentlichen beidseitig armierten Außenfolienschlauch können die erfindungsgemäßen Auskleidungsschläuche weitere Folien aufweisen, die verstärkt oder unverstärkt sein können. So können beispielsweise auf der den härtbaren Faserbändern abgewandten Seite des beidseitig armierten Folienschlauchs eine oder mehrere weitere Folien angeordnet sein, die unverstärkt, einseitig armiert oder beidseitig armiert sein können.

Weiterhin ist es möglich, auf der den härtbaren Faserbändern gegenüberliegenden Seite der beidseitig armierten Folie eine Verstärkungsschicht vorzusehen.

Durch eine solche dritte Armierung wird die Dichtigkeit des Gesamtsystems verbessert, da durch die dritte, insbesondere harzgetränkte, Verstärkungsschicht auf der den Faserbändern gegenüberliegenden Seite die Aussparung von Randstreifen bei der Verbindung der Randbereiche nicht erforderlich ist.

Gemäß einer bevorzugten Ausführungsform der Erfindung kann vorgesehen sein, dass auf dem ersten Außenfolienschlauch mindestens ein weiterer Außenfolienschlauch angeordnet ist, wobei der weitere oder die weiteren Außenfolienschlauch bzw. Außenfolienschläuche einseitig oder beidseitig armiert, insbesondere mit einer Vliesschicht kaschiert sein kann bzw. können. In diesem Fall wäre der erste Folienschlauch richtigerweise nicht mehr als Außenfolienschlauch zu bezeichnen, sondern als "außen angeordneter" Folienschlauch, wobei außen angeordnet andeutet, dass der Folienschlauch auf der dem strömenden fluiden Medium abgewandten Seite der Faserbänder angeordnet ist.

Für die Zwecke der vorliegenden Erfindung wird der Begriff "Aussenfolienschlauch" grundsätzlich für Schläuche verwendet, die nach Einbau des Auskleidungsschlauchs in das zu sanierende Leitungssystem auf der Oberfläche der harzgetränkten Faserbänder zu liegen kommen, die dem im Leitungssystem strömenden Medium abgewandt ist. Wenn es mehrere dieser Schläuche gibt, wird der Folienschlauch durch nähere Angaben hinsichtlich seiner Lage und Anordnung näher charakterisiert.

Weitere Folienschläuche sind für die weitere Erhöhung der Dichtigkeit von Vorteil. Insbesondere für die Dichtigkeit in den Randbereichen des doppelt armierten ersten äußeren Folienschlauchs der erfindungsgemäßen Auskleidungsschläuche kann dies in vielen Fällen vorteilhaft sein.

Im Falle der Verwendung von ggf. armierten weiteren Folienschläuchen ist in der Regel mindestens eine der Armierung von zwei miteinander in Berührung stehenden Folienschläuchen mit Harz getränkt. Eine Tränkung einer Armierung bei zwei miteinander in Kontakt stehenden Armierungen ist in der Regel ausreichend, um eine Imprägnierung bzw. Tränkung auch der zweiten Armierungsschicht zu erreichen, was für die Verbindung der Armierungen (und damit der Folienschläuche) von Vorteil ist und auch für die Dichtigkeit nach Aushärtung vorteilhafte Auswirkungen hat.

Als echter "äußerster" Außenfolienschlauch ist richtigerweise nur der Folienschlauch zu bezeichnen, der den äußeren Abschluss des Auskleidungsschlauchs bildet, der den Auskleidungsschlauch von der Umgebung (im Fall von Kanalsystemen in der Regel das Erdreich) trennt.

Erfindungsgemäß kann gemäß einer Ausführungsform vorgesehen sein, dass Randbereiche von der mindestens einen ersten und/oder der mindestens einen zweiten vorstehend beschriebenen Kunststofffolien versetzt zueinander angeordnet sind, was z.B. durch schraubenförmiges Wickeln der Folienschläuche erreicht werden kann. Dies kann vorteilhaft für die Dichtigkeit der erfindungsgemäßen Auskleidungsschläuche nach Aushärtung sein.

Auch kann vorgesehen sein, dass die erste und/oder zweite Kunststofffolie mindestens einen thermoplastischen Kunststoff umfasst oder aus diesem besteht, insbesondere eine Polyolefinfolie, eine Polyamidfolie oder eine Verbundfolie aus Polyolefinen und Polyamiden umfasst oder ausbildet.

Thermoplastische Kunststoffe haben sich als vorteilhaft erwiesen, da die Armierungsschichten mindestens partiell in die thermoplastischen Kunststoffe eingeschmolzen werden können (thermoplastische Kunststoffe sind reversibel über die Schmelze verarbeitbar), so dass sich die Stabilität des Auskleidungsschlauchs erhöht. Eine Polyäthylenfolie bringt dabei gewünschte Verarbeitungsvorteile. Eine Polyamidfolie hat den Vorteil, dass diese eine Diffusionsbarriere darstellen kann, und die Abgabe von unerwünschten Stoffen des Auskleidungsschlauchs, insbesondere von Styrol, durch die Verwendung einer Polyamidfolie an die Umwelt verhindert oder minimiert wird.

In Bezug auf die verschiedenen Armierungsschichten, vorzugsweise Vliesschichten, sieht die Erfindung Dicken von 10 µm bis 1000 µm, vorzugsweise von 20 bis 500 µm und insbesondere von 25 bis 150 µm, vor. Ein Flächengewicht von 10 gr bis 300 gr pro qm, vorzugsweise von 15 bis 200 gr pro qm und insbesondere von 20 bis 80 gr pro qm hat sich als vorteilhaft erwiesen. In manchen Fällen haben sich Dicken im Bereich von 40 bis 90 µm als vorteilhaft erwiesen.

Als Harz für die Tränkung der verschiedenen Schichten der erfindungsgemäßen Auskleidungsschläuche eigenen sich alle dem Fachmann dafür bekannten, in der Literatur beschriebenen und kommerziell erhältlichen Produkte. Beispielsweise seien hier erwähnt ungesättigte Polyesterharze, Vinylesterharze oder Epoxidharze, die in vielen verschiedenen Formen in der Literatur beschrieben und kommerziell erhältlich sind.

Dabei kann vorgesehen sein, dass die Randbereiche zweier in Kontakt stehender Kunststofffolien, insbesondere wenn diese beiden Kunststofffolien unterschiedliche Schmelzbereiche aufweisen, nicht armiert sind, da dies die Verbindung der Randbereiche dieser Folien durch thermische Verfahren erleichtern kann.

Auf den vorstehend beschriebenen außen angeordneten Folien wird in der Regel mindestens eine lichtundurchlässige Schutzfolie angeordnet, die auch eine als Diffusionsbarriere ausgebildete Schicht enthalten kann und die den Auskleidungsschlauch beim Transport vor Beschädigungen und vorzeitiger Aushärtung schützt. Diese Schicht oder Folie verbleibt nach dem Einbringen des Auskleidungsschlauchs in das zu sanierende Leitungssystem im Leitungssystem, wenn der Auskleidungsschlauch durch Einziehen ohne Inversion (Umstülpen) in das zu sanierende Leitungssystem eingebracht wird. Wenn der Auskleidungsschlauch durch Inversion in das zu sanierende Leitungssystem eingebracht wird, wird diese Schutzfolie im eingebauten Zustand zu einer Innenfolie und wird nach Einbringung in das Leitungssystem und vor der Aushärtung entfernt, da eine Härtung durch Bestrahlung wegen der Undurchlässigkeit dieses Schlauchs für das zur Bestrahlung verwendete Licht nicht möglich ist.

Vorteilhafterweise kann der Auskleidungsschlauch auf der dem fluiden Medium zugewandten Seite der aushärtbaren Lage aus einem oder mehreren Faserbändern mit einer oder mehreren inneren Schutzfolien, insbesondere in Form von Kunststofffolien, versehen sein. Entsprechende Folien sind dem Fachmann an sich bekannt und in der Literatur beschrieben, so dass sich hier nähere Ausführungen erübrigen.

Zwischen dieser Schutzfolie und der Lage aus mindestens einem harzgetränkten Faserband können weitere Armierungsschichten oder armierte Folienschläuche angeordnet sein. Auch hierzu sind geeignete Produkte dem Fachmann bekannt und in der Literatur beschrieben, so dass sich nähere Angaben hier erübrigen.

Gemäß einem besonders bevorzugten Aufbau kann zwischen der inneren Schutzfolie und der Lage aus Faserbändern ein beidseitig armierter Folienschlauch vorgesehen sein, der einen weiteren Schutz vor der abrasiven Wirkung im strömenden Medium evtl. vorhandener Bestandteile bietet und zudem einen Austritt des strömenden Mediums aus dem Auskleidungsschlauch nach außen verhindert. Die Armierung dieses Folienschlauchs kann auf einer oder beiden Seiten mit Harz getränkt sein, um eine bessere Anbindung an die aushärtbaren Faserbänder zu erreichen. Zwischen der Innenfolie und der beidseitig armierten vorstehend beschriebenen Folie kann eine weitere Verstärkungsschicht aus einem Vlies oder dgl. vorgesehen sein, die ebenfalls harzgetränkt sein kann.

Gegenstand der vorliegenden Erfindung ist weiterhin ein Verfahren zum Herstellen eines Auskleidungsschlauchs, insbesondere eines erfindungsgemäßen Auskleidungsschlauchs, umfassend die folgenden Schritte, insbesondere in dieser Reihenfolge:
a) Bereitstellen mindestens einer, insbesondere schlauchförmigen, Innenfolie;
b) schraubenförmiges und überlappendes Aufwickeln von mindestens einem mit Harz getränkten Faserband zur Ausbildung mindestens einer aushärtbaren Lage auf die mindestens eine Innenfolie, insbesondere mittels eines Wickeldorns;
c) schraubenförmiges und überlappendes Aufwickeln, insbesondere mittels eines Wickeldorns, und/oder Umlegen von einem ersten Außenschlauch auf die mindestens eine aushärtbare oder aushärtende Lage, wobei der erste Außenschlauch mindestens eine erste beidseitig armierte Kunststofffolie umfasst, wobei die Armierungsschichten jeweils eine Dicke von 10 bis 1000 µm aufweisen und mit Harz getränkt sind.

Gemäß einer Ausführungsform des erfindungsgemäßen Verfahren werden mit Harz getränkte Faserbänder als mindestens eine aushärtbare Lage zu einem Schlauchkörper geformt, die dann von mindestens einem ersten Außenschlauch umgeben wird.

Beispielsweise wird erfindungsgemäß um mindestens einen auf einen Wickeldorn aufgezogenen Innenfolienschlauch mindestens ein harzgetränktes Faserband herumgewickelt und anschließend die erste Außenfolie (oder korrekter außen angeordnete Folie) außen aufgebracht. Die erste Außenfolie wird dabei durch Aufwickeln, oder durch Umlegen bzw. Aufziehen von einem beidseitig armierten Außenschlauch aufgebracht.

Durch zueinander versetztes schraubenförmiges und überlappendes Aufwickeln und/oder Umlegen der verschiedenen Lagen der erfindungsgemäßen Auskleidungsschläuche kann erreicht werden, dass die Randbereiche benachbarter Folienschläuche versetzt zueinander angeordnet sind, was für die Dichtigkeit des Auskleidungsschlauchs nach Aushärtung von Vorteil sein kann.

Das Einführen des Auskleidungsschlauchs in einen zu sanierenden Abschnitt des Leitungssystems kann direkt, z.B. mit Hilfe einer Winde erfolgen oder indem man einen inversierten Liner mittels Druckluft oder durch Einpressen von Wasser in das Rohr einstülpt. Dies ist insbesondere dann zweckmäßig, wenn - wie bei einer bevorzugten Ausführungsform der Erfindung - Hausanschluss- oder Seitenkanäle, die von einem Hauptkanal abgehen, saniert werden sollen, wie es z. B in der US-A 6,227,764 beschrieben ist. Wegen des in der Regel geringeren Durchmessers dieser Systeme und der häufig vorhandenen Umlenkungen sind Einzugsverfahren dort häufig mit Schwierigkeiten verbunden und Inversierverfahren bringen Vorteile mit sich. Inversierverfahren sind dem Fachmann bekannt und in der Literatur beschreiben, so dass sich hier weitere Angaben erübrigen.

Der Auskleidungsschlauch (Liner) wird anschließend zum Beispiel durch Druckluft aufgeweitet, so dass er sich an die Innenwand des zu sanierenden Rohrs dicht anschmiegt.

Nach Einführung des Auskleidungsschlauchs in das zu sanierende fluidführende Leitungssystem wird der Auskleidungsschlauch in an sich bekannter Weise ausgehärtet, wobei der Fachmann das geeignete Aushärtungsverfahren in Abhängigkeit vom ausgewählten Harz wählen wird. Entsprechende Verfahren sind dem Fachmann bekannt und in der Literatur beschrieben, so dass sich nähere Ausführungen an dieser Stelle erübrigen.

Ein weiterer Gegenstand der Erfindung ist die Verwendung der erfindungsgemäßen Auskleidungsschläuche zur Sanierung fluidführender Leitungssysteme.

Unter Leitungssystemen im Sinne der vorliegenden Erfindung sollen Leitungssysteme jeglicher Art zum Transport von flüssigen oder gasförmigen Medien verstanden werden, die bei Unterdruck, Normaldruck oder Überdruck betrieben werden können. Beispielhaft seien hier Pipelines jeglicher Art, Rohrleitungssysteme zum Transport von Medien in chemischen Betrieben und Produktionsanlagen, Druckleitungen wie Druckwasserrohre und Trinkwasserrohre und insbesondere auch Abwassersysteme genannt, die unterirdisch bzw. nicht sichtbar verlegt sind.

Schließlich liefert die Erfindung ein Auskleidungsrohr aus mindestens einem ausgehärteten erfindungsgemäßen Auskleidungsschlauch insbesondere eingeführt und/oder angeordnet in einem zu sanierenden Rohr und/oder einer zu sanierenden Leitung.

Die erfindungsgemäßen Auskleidungsschläuche eignen sich zur Sanierung von fluidführenden Leitungssystemen jeglicher Art. Beispielhaft seien hier verschiedenste Arten von Kanal- und sonstigen Abwassersystemen sowie Rohrleitungssysteme in industriellen Produktionsanlagen genannt. Die erfindungsgemäßen Auskleidungsschläuche ermöglichen die Sanierung von Leitungssystemen ohne dass das Leitungssystem selbst freigelegt werden muss, was insbesondere bei schwierig zugänglichen Leitungen eine erhebliche Erleichterung und Kosteneinsparung mit sich bringt, da beispielsweise aufwendige Erdarbeiten weitgehend entfallen. Dies ist insbesondere bei der Sanierung von Kanalsystemen in Städten von Vorteil, weil die grabenlose Sanierung auch den laufenden Verkehr wesentlich weniger beeinträchtigt als die traditionelle Sanierung.

Die erfindungsgemäßen Auskleidungsschläuche weisen nach der Einbringung in das zu sanierende fluidführende Leitungssystem und nachfolgender Aushärtung eine besonders gute Dichtigkeit auf, was insbesondere bei Anwendungen von Vorteil ist, bei denen sich die zu sanierenden Leitungssysteme in geschützten oder zu schützenden Bereichen befinden.

Nach einer Aushärtung der Auskleidungsschläuche im Leitungssystem sollen diese möglichst dicht sein. Bei einer Dichtheitsprüfung nach DIN EN 1610 (1997), Kapitel 13.2, Verfahren L (Prüfung mit Luft) darf bei einem Auskleidungsrohr gemäß dem Stand der Technik bei einem Druck von 200 mbar und eine vom Durchmesser bzw. der Dicke abhängigen Prüfzeit im Bereich von 1,5 bis 5 min ein Druckverlust von max. 15 mbar festgestellt werden. Dieser Druckverlust entspricht einer Dichtheit der Auskleidungsschläuche, die für viele Anwendungsbereiche ausreichend ist.
Es sind jedoch auch Anwendungsbereiche von Auskleidungsschläuchen bekannt, die eine noch höhere Dichtheit derselben erfordern. Beispielsweise bei Druckwasserleitungen werden höhere Anforderungen an die Dichtheit gestellt, da durch Kapillaren an dem Auskleidungsrohr und/oder an den Überlappungsstellen des Außenschlauchs Luft austreten bzw. Wasser eintreten kann. Auch für diese Anwendungsbereiche eignen sich die Auskleidungsschläuche gemäß der vorliegenden Erfindung in vorteilhafter Weise.

## Patentansprüche

1. Auskleidungsschlauch zur Sanierung fluidführender Leitungssysteme mit mindestens einer aushärtbaren Lage aus mindestens einem mit Harz getränkten Faserband und einem auf der aushärtbaren Lage dem strömenden Medium abgewandten Seite angeordneten ersten, beidseitig mit einer eine Dicke von 10 bis 1000 µm aufweisenden Armierung versehenen Außenfolienschlauch, wobei dieser Außenfolienschlauch beidseitig mit Harz getränkt ist.

2. Auskleidungsschlauch nach Anspruch 1, **dadurch gekennzeichnet, dass** als Armierung ein Vlies, Filz, Gewebe oder Gelege enthalten ist.

3. Auskleidungsschlauch nach einem der Ansprüche 1 bis 2, **dadurch gekennzeichnet, dass** als Armierung ein aufkaschiertes Vlies enthalten ist.

4. Auskleidungsschlauch nach einem der Ansprüche 1 bis 3, **dadurch gekennzeichnet, dass** weitere Folienschläuche vorhanden sind, die verstärkt oder unverstärkt sind.

5. Auskleidungsschlauch nach einem der Ansprüche 1 bis 4, enthaltend auf der den Faserbändern gegenüberliegenden Seite eine Verstärkungsschicht.

6. Auskleidungsschlauch nach einem der Ansprüche 4 oder 5, enthaltend einen auf dem beidseitig armierten ersten Außenfolienschlauch angeordneten weiteren Außenfolienschlauch.

7. Verfahren zum Herstellen eines Auskleidungsschlauchs, insbesondere eines Auskleidungsschlauchs nach einem der Ansprüche 1 bis 6, umfassend die folgenden Schritte:
a) Bereitstellen mindestens einer Innenfolie;
b) schraubenförmiges und überlappendes Aufwickeln von mindestens einem mit Harz getränkten Faserband zur Ausbildung mindestens einer aushärtbaren Lage auf die mindestens eine Innenfolie;
c) schraubenförmiges und überlappendes Aufwickeln und/oder Umlegen von einem ersten Außenfolienschlauch auf die mindestens eine aushärtbare oder aushärtende Lage, wobei der erste Außenfolienschlauch mindestens eine erste beidseitig armierte Kunststofffolie umfasst, wobei die Armierungsschichten jeweils eine Dicke von 10 bis 1000 µm aufweisen und mit Harz getränkt sind.

8. Verfahren nach Anspruch 7, **dadurch gekennzeichnet dass** in Schritt a) eine schlauchförmige Innenfolie eingesetzt wird.

9. Verfahren nach Anspruch 7 oder 8, **dadurch gekennzeichnet, dass** das Aufwickeln Schritt b) oder c) oder in beiden Schritten b) und c) mittels eines Wickeldorns erfolgt.

10. Verwendung des Auskleidungsschlauchs nach einem der Ansprüche 1 bis 6 oder wie nach einem der Ansprüche 7 bis 9 erhalten zur Sanierung fluidführender Leitungssysteme.

11. Verwendung nach Anspruch 10 wobei das fluidführende Leitungssystem ein Abwassersystem ist.

12. Auskleidungsrohr, erhältlich durch Aushärtung eines Auskleidungsschlauchs nach einem der Ansprüche 1 bis 6 oder wie nach einem der Ansprüche 7 bis 9 erhalten.

## Claims

1. Lining sleeve for rehabilitating fluid-conducting line systems, having at least one curable layer composed of at least one resin-impregnated fibre band and having a first outer film sleeve which is arranged on the curable layer on the side facing away from the flowing medium and both sides of which are provided with a reinforcement having a thickness of 10 to 1000 µm, wherein both sides of said outer film sleeve are impregnated with resin.

2. Lining sleeve according to Claim 1, **characterized in that** a nonwoven, felt, woven fabric or laid scrim is present as reinforcement.

3. Lining sleeve according to either of Claims 1 and 2, **characterized in that** a laminated nonwoven is present as reinforcement.

4. Lining sleeve according to one of Claims 1 to 3, **characterized in that** further film sleeves are present, which are reinforced or non-reinforced.

5. Lining sleeve according to one of Claims 1 to 4, comprising a reinforcing layer on the side opposite the fibre bands.

6. Lining sleeve according to either of Claims 4 and 5, comprising a further outer film sleeve which is arranged on the first outer film sleeve which is reinforced on both sides.

7. Method for producing a lining sleeve, in particular a lining sleeve according to one of Claims 1 to 6, comprising the following steps of:
a) providing at least one inner film;
b) winding at least one resin-impregnated fibre band onto the at least one inner film in a helical and overlapping manner in order to form at least one curable layer;
c) winding and/or overlaying a first outer film sleeve onto the at least one curable or curing layer in a helical and overlapping manner, wherein the first outer film sleeve comprises at least a first plastics film which is reinforced on both sides, wherein the reinforcement layers each have a thickness of 10 to 1000 µm and are impregnated with resin.

8. Method according to Claim 7, **characterized in that** a sleeve-shaped inner film is used in step a).

9. Method according to Claim 7 or 8, **characterized in that** the winding in step b) or c) or in both of steps b) and c) takes place by means of a winding mandrel.

10. Use of the lining sleeve according to one of Claims 1 to 6 or as obtained according to one of Claims 7 to 9 for rehabilitating fluid-conducting line systems.

11. Use according to Claim 10, wherein the fluid-conducting line system is a wastewater system.

12. Lining tube obtainable by curing a lining sleeve according to one of Claims 1 to 6 or as obtained according to one of Claims 7 to 9.

## Revendications

1. Tube de doublage pour la rénovation de systèmes de canalisation de transport de fluide, comprenant au moins une couche durcissable composée d'au moins un ruban de fibres imprégné de résine, et un premier revêtement tubulaire extérieur, pourvu sur les deux faces d'une armure présentant une épaisseur de 10 à 1000 µm et disposé sur la couche durcissable du côté détourné du fluide qui s'écoule, ledit revêtement tubulaire extérieur étant imprégné de résine sur les deux faces.

2. Tube de doublage selon la revendication 1, **caractérisé en ce qu'**il comprend un non-tissé, un feutre, un tissu ou une nappe en tant qu'armure.

3. Tube de doublage selon l'une quelconque des revendications 1 et 2, **caractérisé en ce qu'**il comprend un non-tissé contrecollé en tant qu'armure.

4. Tube de doublage selon l'une quelconque des revendications 1 à 3, **caractérisé en ce que** d'autres revêtements tubulaires sont présents, qui sont renforcés ou non renforcés.

5. Tube de doublage selon l'une quelconque des revendications 1 à 4, comprenant une couche de renforcement sur la face opposée aux rubans de fibres.

6. Tube de doublage selon l'une quelconque des revendications 4 et 5, comprenant un autre revêtement tubulaire extérieur, disposé sur le premier revêtement tubulaire extérieur armé sur les deux faces.

7. Procédé de fabrication d'un tube de doublage, en particulier d'un tube de doublage selon l'une quelconque des revendications 1 à 6, comprenant les étapes suivantes consistant à :
a) fournir au moins un revêtement intérieur ;
b) enrouler de manière hélicoïdale et chevauchante au moins un ruban de fibres imprégné de résine pour réaliser au moins une couche durcissable sur ledit au moins un revêtement intérieur ;
c) enrouler de manière hélicoïdale et chevauchante et/ou replier un premier revêtement tubulaire extérieur sur ladite au moins une couche durcissable ou durcissante, le premier revêtement tubulaire extérieur comprenant au moins un premier revêtement de plastique armé sur les deux faces, les couches d'armature présentant respectivement une épaisseur de 10 à 1000 µm et étant imprégnées de résine.

8. Procédé selon la revendication 7, **caractérisé en ce qu'**à l'étape a), un revêtement intérieur tubulaire est inséré.

9. Procédé selon la revendication 7 ou 8, **caractérisé en ce que** l'enroulement à l'étape b) ou c) ou aux deux étapes b) et c) est effectué au moyen d'un mandrin d'enroulement.

10. Utilisation du tube de doublage selon l'une quelconque des revendications 1 à 6 ou tel qu'obtenu selon l'une quelconque des revendications 7 à 9 pour la rénovation de systèmes de canalisation de transport de fluide.

11. Utilisation selon la revendication 10, dans laquelle le système de canalisation de transport de fluide est un système d'eaux usées.

12. Conduite de doublage, pouvant être obtenue par le durcissement d'un tube de doublage selon l'une quelconque des revendications 1 à 6 ou tel qu'obtenu selon l'une quelconque des revendications 7 à 9.
